Europäisches Patentamt

European Patent Office

Office européen des brevets

(11) Publication number: **0 401 777**
**A1**

## EUROPEAN PATENT APPLICATION

(21) Application number: **90110679.9**

(22) Date of filing: **06.06.90**

(51) Int. Cl.⁵: **B65G 67/20**

(30) Priority: **09.06.89 IT 6747289**

(43) Date of publication of application:
**12.12.90 Bulletin 90/50**

(84) Designated Contracting States:
**AT BE CH DE DK ES FR GB GR IT LI LU NL SE**

(71) Applicant: **SPACE S.r.l.**
**Corso Piemonte, 1**
**I-10099 San Mauro Torinese(IT)**

(72) Inventor: **Pellegrino, Luigi**
**Via Roncola 42**
**I-10090 Rivalba (Torino)(IT)**

(74) Representative: **Buzzi, Franco et al**
**c/o Jacobacci-Casetta & Perani S.p.A. Via**
**Alfieri, 17**
**I-10121 Torino(IT)**

(54) **A system for the rapid loading and unloading of trucks, containers and the like.**

(57) A system for the rapid loading and unloading of trucks, containers and the like, comprising a movable transfer unit (1) including a base structure (2) carrying longitudinal support members (6) each formed by mutually-articulated segments provided underneath with rollers (10) on which the unit can run and which carry above them continuous plates (13) for supporting the loads (C), which plates are movable vertically relative to the rollers. The support plates are moved vertically by inflatable and deflatable pneumatic bladder means (16), and motor-driven means are provided for moving the unit between a position for picking up the load and a position for its delivery.

FIG. 5

## A system for the rapid loading and unloading of trucks, containers and the like

The present invention relates in general to systems for loading and unloading trucks, containers and the like from a position (for example a platform) situated substantially at the same level as their load beds.

The object of the present invention is to provide a system which is practical, functional and quite simple and which enables loading and unloading to be carried out completely automatically, in very short periods of time and without the need to install special equipment in the vehicle or container.

The loading and unloading system according to the invention is characterised in that it comprises a movable transfer unit including a base structure carrying longitudinal support members each formed by mutually-articulated segments provided underneath with rollers on which the unit can run and which carry above them continuous load-support plates which are movable vertically relative to the rollers by means of inflatable and deflatable pneumatic bladder means; motor-driven means being provided for moving the support plates between a position for picking up the load and a position for delivering the load, as well as pneumatic means for inflating and deflating the bladder means.

The invention will now be described in detail with reference to the appended drawings, provided purely by way of non-limiting example, in which:

Figure 1 is a schematic side elevation of a rapid loading and unloading system according to the invention,

Figure 2 is a plan view of Figure 1,

Figure 3 is a view taken on the arrow III of Figure 1 on an enlarged scale,

Figure 4 is a schematic front elevation taken on the arrow IV of Figure 3 during the operation of the system,

Figure 5 is a cross-section taken on the line V-V of Figure 3 during the operation of the system, on an enlarged scale, and

Figures 6 and 7 are two cross-sections taken on the lines VI-VI and VII-VII of Figure 3 respectively, on an enlarged scale, during the operation of the system,

Figure 8 is a schematic view, in partial longitudinal section, of a first variant of the invention, and

Figures 9 and 10 are two views, similar to Figures 6 and 7 respectively, of a second variant of the invention.

In general, the loading and unloading system of the invention is used for transferring loads C on to transporter vehicles from a platform B situated at a level substantially corresponding to that of the load bed of the vehicle, and vice versa.

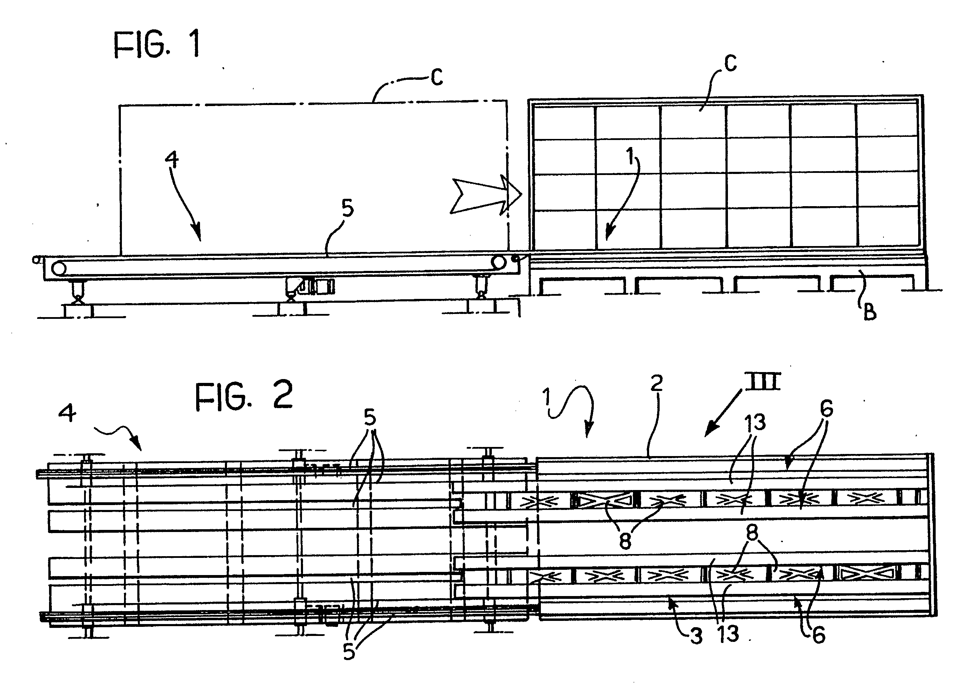

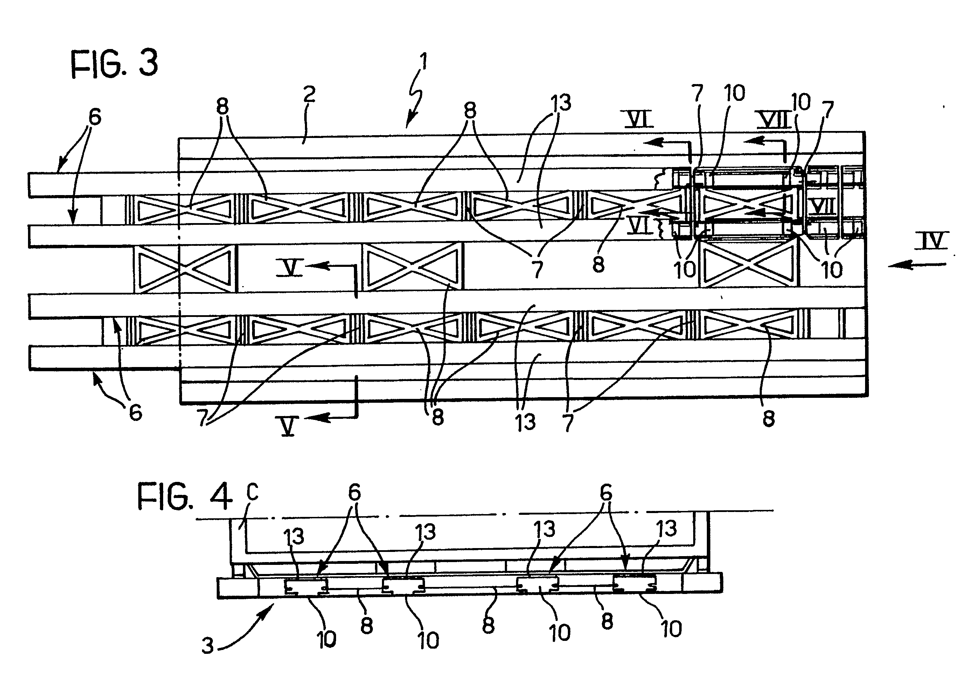

With reference initially to Figures 1 to 7, the system is composed essentially of a transfer unit, generally indicated 1, comprising a base structure 2 carrying a belt 3. The unit 1 is movable in a direction transverse the position of the motor vehicles along longitudinal guide rails (not shown) installed on the platform B between the motor vehicles and a plurality of stations 4 for accumulating the loads. C. In the embodiment illustrated, the accumulation stations 4 are constituted by motor-driven chain conveyors 5 whereby the loads C are transferred on to the transfer unit 1 from time to time in the manner shown schematically in Figure 1.

The belt 3 of the transfer unit 1 is formed by two pairs of interconnected longitudinal members 6, each including segments (normally between about 80 cm and 1 m long) articulated together by means of transverse pins 7. The pins 7 pivotably interconnect the segments of the two pairs of longitudinal members 6 through intermediate plates 8.

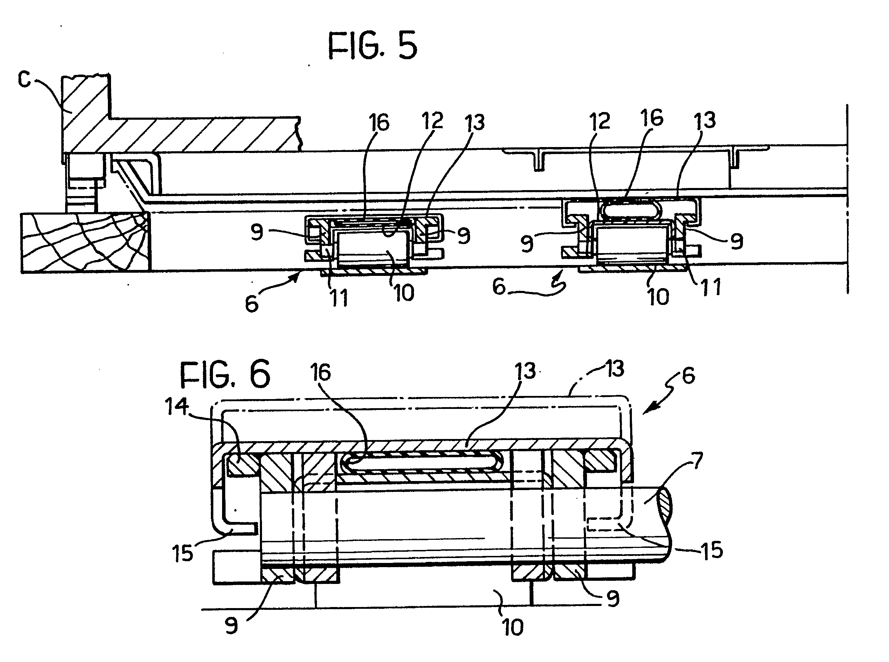

With reference in greater detail to Figures 5 to 7, each segment is composed of two side walls 9, the lower parts of which support rollers 10 which are freely rotatable about respective pins 11. The rollers 10, whereby the belt 3 is movable relative to the base structure 2, are surmounted by lower fixed support plates 12.

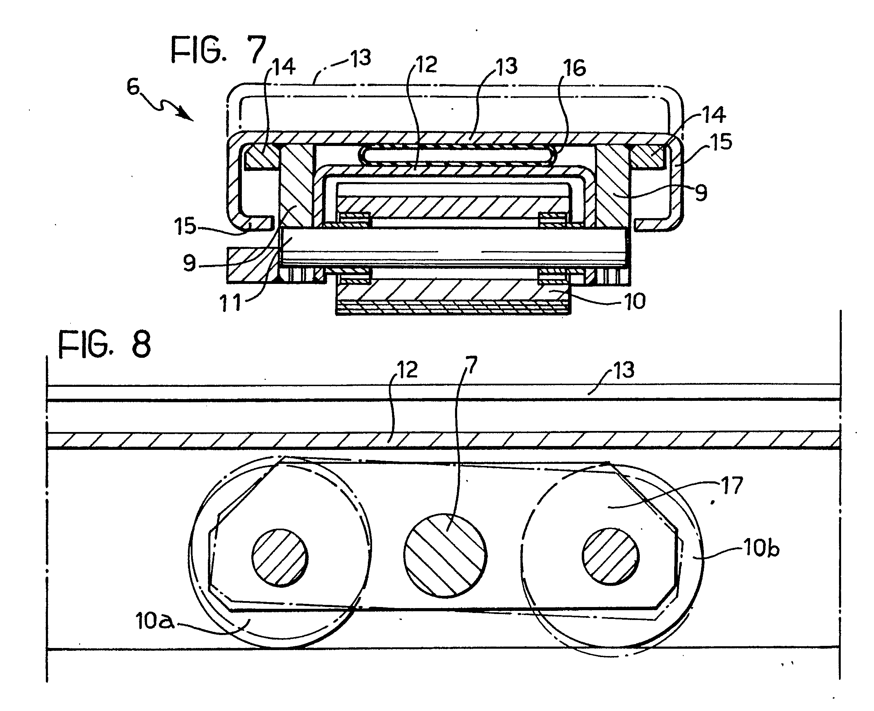

Upper, movable support plates, indicated 13, extend without discontinuity along the segments, of the longitudinal members 6 and are movable vertically relative to the side walls 9, and hence relative to the rollers 10, between the lowered position shown in continuous outline in Figures 6 and 7 and in the left-hand part of Figure 5, and the raised position shown in broken outline in Figures 6 and 7 and in the right-hand part of Figure 5. The upward travel of the plates 13 is limited by upper stops 14 on the side walls 9 which cooperate with corresponding bent parts 15 of the plates 13.

The plates 13 are moved between the positions described above by the inflation and deflation of pneumatic bladders 16 interposed longitudinally between the inner plates 12 and the outer plates 13 of the four longitudinal members 6. Inflation and deflation are achieved by a pneumatic installation, not shown but obviously within the capabilities of an expert in the art, associated with the transfer unit 1.

As stated, the belt 3 is movable relative to the base structure 2 so as to move towards or away from the truck to be loaded or unloaded. Its movement is normally driven, for example, by means of a hydraulic motor (not illustrated), carried by the base 2, and an open chain transmission, also not illustrated, or by equivalent systems.

The entire transfer unit 1 is moved along the rails of the platform in a similar manner, or by means of equivalent motor-driven systems, not illustrated but within the capabilities of experts in the art.

A connecting chute (not illustrated) may be articulated to the front end of the base 2 for movement between a raised position and a lowered position in which its front end bears on the load bed of the vehicle which is to be loaded or unloaded.

The system according to the invention operates as follows.

It is assumed that one starts from the situation shown in Figure 1, in which the transfer unit 1 is aligned with the conveyor 4 on which the load C has been formed beforehand. The first operation consists of the transfer of the preformed load C from the conveyor 4 to the transfer unit 1: during this stage, the bladders 16 are kept deflated and hence the plates 13 are in their lowered positions to allow the load C to be positioned. At the end of the transfer operation, the bladders 16 are inflated and consequently the plates 13 are raised and bear against the underside of the load C, raising it and making it fast with the belt 3. At the end of this operation, the transfer unit 1 is moved on the platform B until it is aligned with the vehicle (not illustrated) to be loaded. At this point, the belt 3 is moved relative to the base structure 2 so that the belt 3 together with the load C advances into the vehicle. The movement of the belt 3 is stopped when the load C is positioned correctly in the vehicle, after which the bladders 16 are deflated to disengage the support plates 13 and deposit the load on the loadbed of the vehicle. Finally, the belt 3 is withdrawn from the vehicle until it has returned fully on to its base structure 2 whilst the load C remains bearing on the loadbed of the vehicle.

During its movements, the belt 3 can adapt itself perfectly, both vertically and horizontally, to any unevenness in its path by virtue of the articulated connection between the corresponding segments of the longitudinal members 6 achieved by the pins 7. The continuity of the plates 13, however, ensures that the weight of the load C is distributed uniformly on the belt 3.

In order further to facilitate the adaptation of the belt 3 to any unevenness in its path, it is convenient to use the variant shown in Figure 8 in which the rollers 10 are replaced by pairs of rollers 10a, 10b in tandem, carried by support members 17 which pivot about the articulation pins 7 carried by the side walls 9.

It will be clear from the above that the system according to the invention enables the vehicles (or containers) to be loaded completely automatically in very short periods of time, drastically reducing the manual labour involved and without the need to install special equipment in the vehicles or containers.

Naturally, the details of construction and forms of embodiment may be varied widely with respect to those described and illustrated, without thereby departing from the scope of the present invention. Thus, for example, the number of pairs of longitudinal members 6 could be different from that of the embodiment illustrated and, moreover, the members 6 could be independent of each other rather than being interconnected.

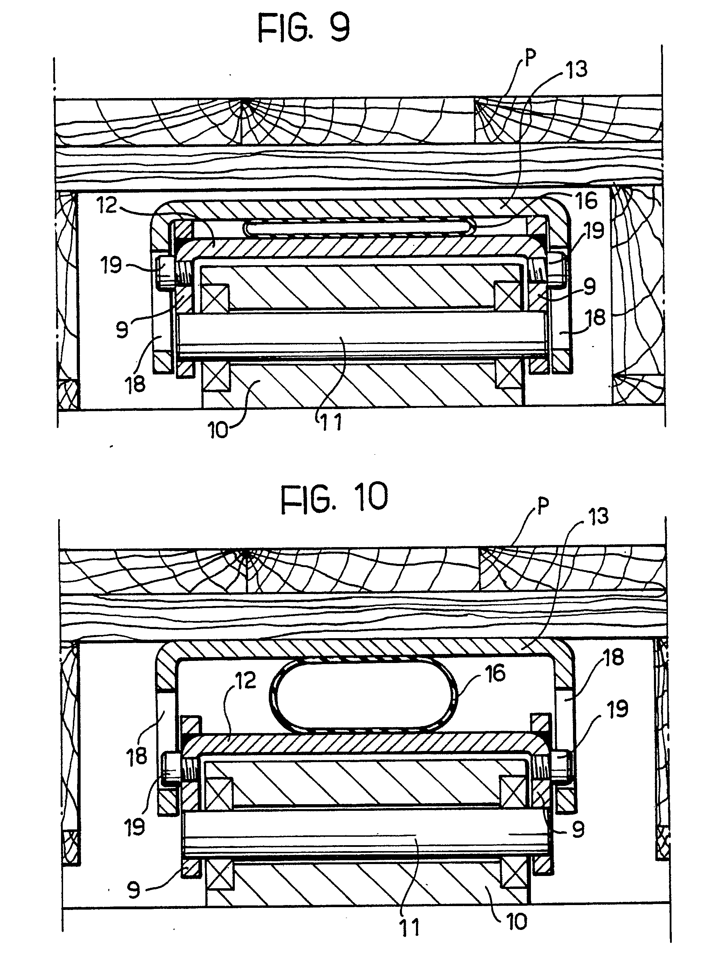

In the variant shown in Figures 9 and 10, in which parts identical to or similar to those described above are indicated by the same reference numerals, each longitudinal member 6 is arranged to engage a longitudinal seat defined, in known manner, in the base of a pallet P for carrying a load. In this variant, each fixed plate 12 is formed integrally with the side walls 9 and the sides of the movable plate 13 are formed with slots 18 in which rollers 19 carried by the side walls 9 are movable vertically. The operation is identical to that described above: Figure 9 shows the deflated condition of the bladder 16 which corresponds to the lowered condition of the plate 13 in which the pallet P bears on the ground, and Figure 10 shows the inflated condition of the bladder 16 which corresponds to the raised condition of the plate 13 in which the pallet P is picked up for transfer.

## Claims

1. A system for the rapid loading and unloading of trucks, containers and the like from and on to a position situated substantially at the same level as their loadbeds, characterised in that it comprises a movable transfer unit (1) including a base structure (2) carrying longitudinal support members (6) each formed by mutually-articulated segments provided underneath with running rollers (10, 10a, 10b) and which carry above them continuous plates (13) for supporting the loads (C), which plates are movable vertically relative to the rollers (10, 10a, 10b) by means of inflatable and deflatable pneumatic bladder means (16); motor-driven means being provided for moving the support plates (13) between a position for picking up the load and a position for delivering the load (C), as well as pneumatic means for inflating and deflating the bladder means (16).

2. A system according to Claim 1, characterised in that the running rollers (10a, 10b) are supported in pairs by respective pivoted supports (17).

FIG. 1

FIG. 2

EP 0 401 777 A1

FIG. 3

FIG. 4

EP 0 401 777 A1

FIG. 5

FIG. 6

FIG. 7

6

14  13  12  13  16

14
15

9

15

9

11

10

FIG. 8

12  7  13

17

10b

10a

EP 0 401 777 A1

# FIG. 9

# FIG. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 437 219 (C.H. STEVENSON) * column 3, line 55 - column 7, line 46; figures 1-6 * | 1,2 | B 65 G 67/20 |
| X | FR-A-2 584 685 (ACTIL) * claims 1,6; figures 1-3 * | 1 | |
| X | DE-A-2 840 214 (ALFRED EISENGRUBER FOERDERANLAGEN) * claims 1-6; figures 1-10 * | 1 | |

TECHNICAL FIELDS SEARCHED (Int. Cl.5)

B 65 G

The present search report has been drawn up for all claims

| Place of search | Date of completion of the search | Examiner |
|---|---|---|
| BERLIN | 20-09-1990 | SIMON J J P |